(19) Europäisches Patentamt / European Patent Office / Office européen des brevets

(11) **EP 4 296 226 A1**

(12) **EUROPEAN PATENT APPLICATION**

(43) Date of publication:
**27.12.2023 Bulletin 2023/52**

(21) Application number: **22181056.7**

(22) Date of filing: **24.06.2022**

(51) International Patent Classification (IPC):
**C01B 32/192** (2017.01)   **C01B 32/194** (2017.01)
**G01K 7/18** (2006.01)

(52) Cooperative Patent Classification (CPC):
**C01B 32/192; C01B 32/194; C01B 32/198;
G01K 7/18**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Espio, s.r.o.
02051 Dohnany (SK)**

(72) Inventors:
• **Vretenár, Viliam
  900 25 Chorvátsky Grob (SK)**
• **Hudec, Ján
  962 37 Kovácová (SK)**

(74) Representative: **Makelová, Katarína
  Septum s.r.o.
  Kopcianska 10
  851 01 Bratislava (SK)**

(54) **THE METHOD OF PREPARING FUNCTIONALIZED REDUCED GRAPHENE OXIDE LAYER AND THE TEMPERATURE SENSOR COMPRISING SUCH A LAYER**

(57)    A method of preparing functionalized reduced graphene oxide layer comprises the following steps:

a) preparation of colloidal dispersion of graphene oxide flakes in the water with concentration 0,5 g/l or less using modified Hummer's method wherein:
- the temperature of the colloidal dispersion is maintained below 10°C during adding of oxidation agents, preferably KMnO4,
- colloidal dispersion is subsequently stirred for at least 50 and no more than 70 minutes while the temperature of the colloidal dispersion is maintained below 10 °C,
- temperature of the water added to the dispersion after stirring is no more than 10°C;

b) functionalization of graphene oxide flakes in dipolar aprotic organic solvent using amine agent;

c) reduction of functionalized graphene oxide flakes using reducing agent,

d) functionalization and reduction according to step b) and step c) is carried out at elevated temperature of at least 90°C but no more than 105 °C;

e) deposition colloidal dispersion of reduced functionalized graphene oxide flakes on non-conductive or electrically passivated substrate using spraying deposition to form sprayed layer under following conditions:
- liquid droplets with size of no more than 5 μm
- substrate temperature during deposition is at least 150 °C,
- sprayed colloid has a concentration of no more than 0.2 g/l;

f) thermal reduction and annealing of sprayed layer from step e) under the following conditions:
- small temperature ramp up to 0.2 °C/min
- stabilization at a temperature of at least 230 °C
- dwelling time of at least 10 hours;

g) passivation of prepared active layer using graphene oxide sprayed layer or adhesive polyimide foil or tropical (non-aromatic) varnish for mechanical and electro-chemical protection.

**Fig. 1**

## Description

### Field of the Invention

The present invention relates to spraying deposition method for preparing functionalized reduced graphene oxide layer as well as to a temperature sensor based on functionalized reduced graphene oxide layer and its application.

### Background of the Invention

A temperature sensor is a device that converts a temperature signal into an electrical signal. It is heavily used in industrial practice, such as biomedical, robotics, production automation, automotive, aerospace, health monitoring, food science etc. The development of temperature sensors is constantly moving towards fast response, high accuracy, high sensitivity and low-cost production while still providing new functionalities. Among them, a capability of large area sensing and flexibility is of highest demands, particularly for applications, where sensor needs to be mounted on large curving surfaces. A large-area flexible sensor technology is one of the innovative approaches offering potential benefits in various applications including wearable electronics, light emitting diodes, energy harvesting and storage systems or biomedical sensors (Nagarjuna Neella et al., 2017).

Nowadays, contact type electrical temperature sensors use solid and bulky sensing materials, i.e., thermocouples consist of mixture of high purity metals, thermistors are based on semiconducting ceramic materials, and RTDs are made of noble or high purity metals. In these cases, the sensor elements are fabricated typically in the form of discs, pellets or thin films on rigid substrates. On the one hand, such material composition and design provide great stability, accuracy and reproducibility in general, but on the other hand, their rigidity and relatively high fabrication costs prevent them from effective use in custom-tailored solutions or simply where large area sensing and flexibility play important role. Emerging low-dimensional materials, such as carbon nanotubes, graphene, MXenes and transition metal dichalcogenides, they all attract interest for potential sensing application for many years. Unlike the standard materials, they could provide a facile approach for large are sensing, and using low-cost synthesis and deposition methods, they could remain competitive on the market. Among them, graphene, graphene oxide and graphene oxides derivatives as well as their different polymer-based composite forms have already demonstrated their potential (US 10766774B2, CN110823396A, KR1575012B1, CN114235212A, CN113280938A). Currently, the chemical routes for synthesis of graphene oxide (GO) (see US2798878A, US10046972B2) are considered as most cost-effective alternatives for mass production of graphene derivates.

Recent development on new graphene-based temperature sensor materials covers a wide span of various synthesis and deposition methods, for instance, various methods for producing a high-quality GO derivative mostly amino-functionalized (US10766774B2, CN108793148B, Peng-Gang Ren et al., 2011, Peng-Gang Ren et al., 2014, NPT1.1, Thanh Tuan Hguyen et al., 2017, Chunyan Wang et al., 2015), or graphene reinforced polymeric or epoxy films (CN110903505A, KR1575012B1, WO2019211813A1, CN114349782A, Thanh Tuan Hguyen et al., 2017). To date, there are plenty different fabrication processes of the sensors, using simple and low-cost deposition method as spraying [KR1575012B1, CN113280938A, US11325151B2 GO coating, Qingxia Liu at al., 2019, Guanyu Liu et. al., 2018) drop casting (see WO2019211813A1 gas sensor, CN107192739A gas sensor, CN114349782A, Nagarjuna Neella et al.,2017, Satyaprakash Sahoo et al., 2012, dip coating on a silane modified $SiO_2$ substrate (CN110823396A), ink-jet printing (KR1575012B1, De Kong et al., 2012), spin coating (KR1575012B1), soaking into porous substrate (CN114235212A), but also a synthesis of single layer CVD graphene for multisensory graphene-skin applications (Sohail F. Shaikh and Muhammad M. Hussain, 2020). For electrical connection, they are using either parallel or interdigital two electrodes system, being prepared before or after active GO derivative layer deposition.

Besides a production efficiency, a key aspect in the application of GO derivates for temperature sensing is their general performance. Among the most important parameters belong accuracy, sensitivity, linearity, and long-term stability of measurements in given temperature range. As a matter of fact, most of the above listed patents and scientific papers, provide rather scarce information on electrical characterization and durability of the proposed temperature sensors, reducing their characterization mostly to assessment of sensitivity and linearity of measured signal. Although there are some that claim high accuracy, good linearity and excellent stability, after close inspection one could find those data as strongly misinterpreted. For example, in CN113280938A, the authors declare the linearity parameter (R-squared) of R2 = 0.996, high accuracy (0.1°C), and long-term stability (30 days) in temperature range of 25 - 50 °C. In fact, such a low linearity is not sufficient when compare with standard Pt sensors (R2 > 0.99995) and certainly it negatively affects the accuracy. Repeatability measurement shows uncertainty of 0.4%, which is about 0.3 °C and long-term stability shows 10% change of sensitivity, which is very poor result. In another example, in CN114349782A and Qingxia Liu at al., 2019, the change of sensitivity coefficient was about 1.5% after 16 temperature cycles and as high as 10% after 20 days of stability test, respectively. As a result, the sensors demonstrate clearly very low accuracy in both cases.

In general, using spraying technique as simple and low-cost deposition method, ultra-light thin flexible layers can be easily fabricated from different low-dimensional particles over larger areas in automatic regime. Nevertheless, their high potential for temperature sensing applications might be hindered by their mechanical and chemical instability induced by the preparation method itself. In contrast to standard bulk materials, where covalent bonding between atoms is dominant, in these structures only week van der Waals forces are acting between individual 2D nanoparticles. As a result, such van der Waals structures often exhibit or suffer with low mechanical stability and relatively high porosity, depending on synthesis and deposition method. In the case of reduced graphene oxide flakes, a low-cost spraying deposition might lead to structure containing significant amount of gaps/volume between individual flakes and between their aggregates and thus creating both open and closed porous system. Together with the presence of structural defects and unreduced oxide's groups on individual graphene flakes, it affects its properties as electrical conductivity and mechanical stability.

In summary, it is considered that presented state of technology is far from meeting the industrial standards, and further research and exploration are needed for the development of new high-performance temperature sensor materials.

## Summary of the Invention

The invention relates to a method for preparing functionalized reduced graphene oxide thin layer with such electrical and physical properties that allow it to be used as large-area flexible RTD temperature sensor.

The object of the present invention is to provide a reliable method for producing functionalized reduced graphene oxide (frGO) layers, suitable for temperature sensing with improved stability and reproducibility while keeping sufficient sensitivity and linearity comparable to industrial RTD sensors.

In another aspect, the invention provides a method for preparing functionalized reduced graphene oxide thin layer with such electrical and physical properties that allow it to be used as large-area flexible RTD temperature sensor.

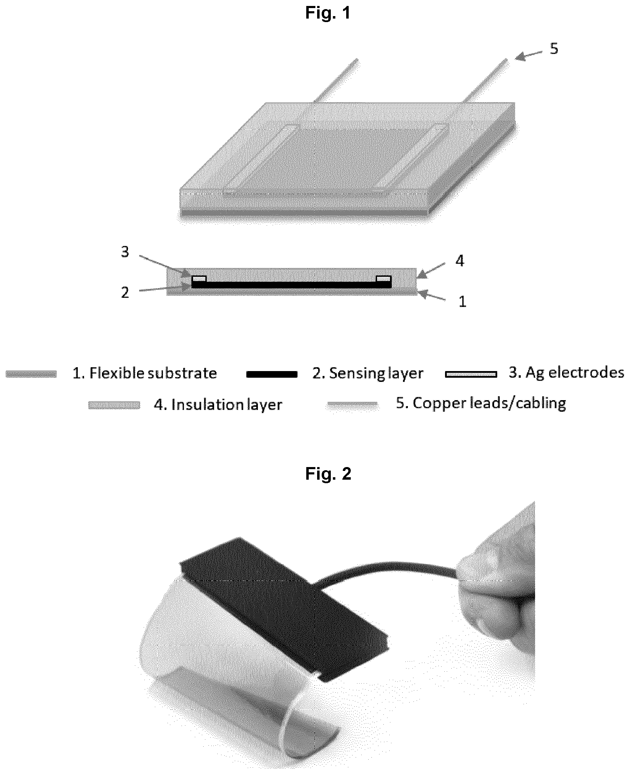

In yet another aspect, the present invention provides a temperature sensor based on functionalized reduced graphene oxide, which is characterized by including a flexible substrate, a sensing layer (functionalized rGO), a conductive silver electrode with leading wires and an insulating encapsulation layer (Fig. 1). Conductive silver electrodes are deposited on the sensing layer to measure its electrical resistance change with temperature. The electrodes are provided as two parallel electrodes at appropriate distance.

According to the invention, the functionalized reduced graphene oxide (frGO) layer as the temperature-sensing layer is formed by chemical and thermal treatment of graphene oxide flakes. The temperature sensitive property of such layer can be explained by the thermal excitation of the carriers in frGO flakes. As the temperature (thermal energy) increases, the limited carrier hopping from frGO flake to flake and carrier tunnelling between neighbouring flakes transport are increased owing to the higher probability of barrier overcoming, known as carrier hopping mechanism. Thus, the number of carriers and their mobility increases with temperature resulting in the decreased electrical resistance, and the sensing layer exhibits negative temperature coefficient (NTC) type dependence.

A method of preparing functionalized reduced graphene oxide layer comprising the following steps:

- A preparation of colloidal dispersion of low defect-density graphene oxide flakes using recipe based on modified Hummers' method (Wufeng Chen, 2010). In general, as key parameters at the oxidation process of graphite are ratio of oxidative compounds ($KMnO_4$, $H_2SO_4$, $KClO_3$, $HNO_3$, $H_2O_2$) and their concentration, time of reactions, temperature of oxidation and size of graphite particles.

- A functionalization of graphene oxide flakes in compatible organic solution using an appropriate amine agent.

- A chemical reduction of functionalized graphene oxide flakes in compatible organic solution using hydrazine hydrates ($N_2H_4.nH_2O$), hydrazine derivates or other reducing agents.

- A deposition of colloidal dispersion of reduced functionalized graphene oxide flakes on non-conductive or electrically passivated flexible substrate using spraying method.

- A slow thermal reduction and annealing of sprayed sensing layer in an air atmosphere.

- A preparation of parallel electrode system by deposition appropriate silver paste on sensing layer using screen-printing or syringe disperser method, followed by an appropriate curing process.

- A passivation of sensing layer using either an adhesive polyimide foil (silicone or epoxy glue) or by deposition of varnish/polymer layer using casting, screen printing or spraying method, followed by an appropriate curing process.

Compared with the prior art, the present invention provides particularly the improved stability, accuracy and linearity of electrical performance of the flexible temperature sensor according to one embodiment of the present invention. Presented inventors found that only the well prepared frGO layer, i.e. free of contaminants, structural defects, unreduced metastable oxygen-containing functional groups (hydroxyl, epoxy, carboxyl, etc.) and organic solvents traces could lead to compact sensing structure resistant enough to changes of surrounding conditions.

The total performance of the temperature sensor depends on the appropriately selected following parameters:

- temperature of oxidation process (leading to low defects density),

- concentration of GO flakes dispersion (preventing agglomeration and coagulation),

- concentration of reactants during functionalization process, temperature and time of reaction, (affect the effectiveness, suppression the reduction process in favour to functionalization),

- concentration of functionalized GO flakes and reactants during chemical reduction process, temperature and time of reaction, (effectiveness of reduction, preventing agglomeration and coagulation),

- appropriate nozzle setting, pressure, flow and concentration during the spraying deposition process (resulting in homogenous and compact frGO layer),

- temperature of substrate during the spraying deposition process (free of traces of organic solvents, preventing decomposition of organic solvent, thermal reduction of some oxygen-containing functional groups)

- minimum thickness of sprayed deposited frGO layer (effect on the stability).

**Brief Description of the Drawings**

Fig. 1. is a schematic drawing of a temperature sensor based on functionalized reduced graphene oxide in a typical embodiment of the present invention.

Fig. 2. Is showing a picture of the temperature sensor fabricated according to the present invention, including plastic support and cabling.

Fig. 3. Is showing a picture of spray-deposited set of frGO layers on polyimide foil (left) and another set with silver electrodes (right, middle part).

Fig. 4. is a resistance-temperature curve of a temperature sensor based on reduced graphene oxide in Example 1 of the present invention.

Fig. 5. is showing a thermal cycling of a temperature sensor based on reduced graphene oxide in Example 1 of the present invention.

Fig. 6. is showing a detail of change of resistance at the temperature of 20 °C during the thermal cycling shown in Fig. 5.

Fig. 7. is showing a detail of change of resistance at the temperature of 60 °C during the thermal cycling shown in Fig. 5.

Fig. 8. is showing a thermo-gravimetric analysis (TGA) of graphene oxide flakes prepared on dimethylacetamide (DMA) organic solvent.

**Detailed Description of the Invention**

The shortcomings of the prior art have been eliminated by the technical solution according to the invention. The technical scheme, its implementation processes and principles will be further explained as follows.

The experimental methods in the following description and examples, unless otherwise specified, are conventional methods; unless otherwise specified, the chemical reagents used in the examples are conventional reagents in the art, and all are commercially available.

The embodiment of the present invention provides a temperature sensor based on functionalized reduced graphene oxide, which is characterized by including a flexible substrate, a sensing layer (functionalized rGO), a conductive silver electrode with leading wires and an insulating encapsulation layer (Fig. 1). Conductive silver electrodes are deposited on the sensing layer to measure its electrical resistance change with temperature. The electrodes are provided as two parallel electrodes at appropriate distance.

Measuring principle of the temperature sensor is based on measurement of the change of electrical resistance of the functionalized reduced graphene oxide layer with the change of temperature. Temperature coefficient of resistance (TCR) is used to describe the temperature-sensitive properties (sensitivity) of the temperature sensor within the following equation (1)

$$TCR = (R - R0)/(R0 - \Delta T),$$

where $R$, $R0$ are the measured resistances at the temperatures $T$ and $T0$, respectively and $\Delta T$ is the temperature difference between $T$ and $T0$.

The producing of a temperature sensor based on functionalized reduced graphene oxide comprises the following steps:

(1) A preparation of colloidal dispersion of graphene oxide flakes in the water with concentration 5 g/l or less using modified Hummer's method wherein:

- the temperature of the colloidal dispersion is maintained below 10 °C during adding of oxidation agents, preferably $KMnO_4$,

- colloidal dispersion is subsequently stirred for at least 50 and no more than 70 minutes while the temperature of the colloidal dispersion is maintained below 10 °C,

- temperature of the water added to the dispersion after stirring is no more than 10 °C;

(2) A functionalization of graphene oxide flakes in dipolar aprotic organic solvent using amine agent under the following conditions:

- a concentration of graphene oxide flakes in organic solvent is preferably less than 0.5 g/l, typically 0.1 g/l,

- a concentration of the amine agent with the respect to the weight of graphene oxide in functionalization process should be preferably more than 1 g/l,

- functionalization is carried out at elevated temperature of at least 90°C but no more than 105 °C, preferably at 95°C;

- functionalization process should last preferably not less than 6 hours.

In addition to the function of a reducing agent, the amine agent can also act as a self-catalyst during the functionalization process. For this reason, it is important to select the concentration of the amine reagent so that functionalization is preferred over the reducing effect. Preferred amine reagents include dodecylamine ($C_{12}H_{27}N$), ethylamine ($C_2H_5NH_2$), hexylamine ($C_6H_{15}N$), benzylamine ($C_7H_9N$), tyramine ($C_8H_{11}NO$), hexadecylamine ($C_{16}H_{35}N$) or octadecylamine ($C_{18}H_{39}N$).

Aprotic polar solvents suitable for compatibility with all technological processes, which mainly include functionalization, chemical reduction and spraying deposition, have the following properties:

- boing point of at least 150 °C;
- thermal stability of at least 180 °C;
- relative polarity of at least 0.3.

Minimal agglomeration of the colloidal dispersion of reduced graphene oxides flakes is ensured by an aprotic polar solvent. The dipolar aprotic organic solvent is preferably selected from (dimethylsulfoxide (DMSO), dimethylformamide (DMF), dimethylacetamide (DMA) or n-methylpyrrolidone (NMP).

(3) A chemical reduction of functionalized graphene oxide flakes using reducing agent under the following conditions:

- a concentration of graphene oxide flakes in organic solvent is preferably less than 0.2 g/l, typically 0.1 g/l,

- a concentration of the reducing agent with the respect to the weight of graphene oxide treated in reduction process should be preferably more than 10 $\mu$l/mg or 10 mg/mg, typically 20 $\mu$l/mg or 20 mg/mg,

- reduction is carried out at elevated temperature of at least 80°C but no more than 105°C, preferably at 95°C;

- reduction process should last preferably not less than 2 hours.

In addition, the reducing agent is selected from the group consisting of hydrazine hydrates ($N_2H_4.nH_2O$), hydrazine derivatives, sodium borohydride ($NaBH_4$) or their combination.

The reduction with hydrazine hydrate is more effective at elevated temperatures between 80°C and 95 °C. At temperatures above 105 °C, the graphene oxide flakes coagulate due to the activation of the van der Waals forces.

(4) A deposition of colloidal dispersion of reduced functionalized graphene oxide flakes on non-conductive or electrically passivated polyimide substrate, preferably Kapton, using spraying deposition method under the following conditions:

- liquid droplets with size as smallest as possible, preferably no more than 5 $\mu$m, which means that an appropriate nozzle (type and needle size), pressure and flow must be chosen depending on a particular spraying tool, typically, needle size of 0.1 mm, pressure from 2 to 4 bars and flow about 10 $\mu$l/min,

- substrate temperature during deposition is at least 150 °C, but no more than thermal decomposition temperature of used organic solvent,

- sprayed colloid has a concentration of no more than 0.2 g/l.

The sprayed-deposited layer is prepared with thickness varied from nanometres to tens of micrometres and areas ranging from $mm^2$ to $m^2$. The mass thickness of the above layer is not less than 30 $\mu$g/cm$^2$, in order to suppress the influence of unwanted surface effects of deposited layer.

The spray-deposition is performed on flat or curved substrates. The substrate is selected from a group of flexible polymers, such as polyimide (PI), polydimethylsiloxane (PDMS), polyethylene terephthalate (PET) or polyurethane (PU). In some cases, the material of the substrate includes glass and silicon wafer with silicon oxide passivation layer. In addition, the flexible polymer substrates have the thickness typically ranging from 5 $\mu$m to 100 $\mu$m.

(5) A thermal reduction and annealing of sprayed layer from 4) take place in an air atmosphere under the following conditions:

- small temperature ramp up to 0.2 °C/min
- stabilization at a temperature of at least 250 °C
- dwelling time of at least 10 hours.

It should be noted that the small rate of temperature change during the thermal reduction step is essential in order to mitigate the creation of cracks and structural defects induced by gas species evolution.

The high temperature of the reduction and annealing process enhances the removal of volatile contaminations, organic solvent residue and oxygen-containing functional groups. The annealing temperature should be higher than the temperature of the use temperature of the temperature sensor.

(6) A preparation of parallel electrode system by deposition appropriate silver paste on sensing layer using screen-printing or syringe disperser method, followed by an appropriate curing process according to the instructions of paste producer.

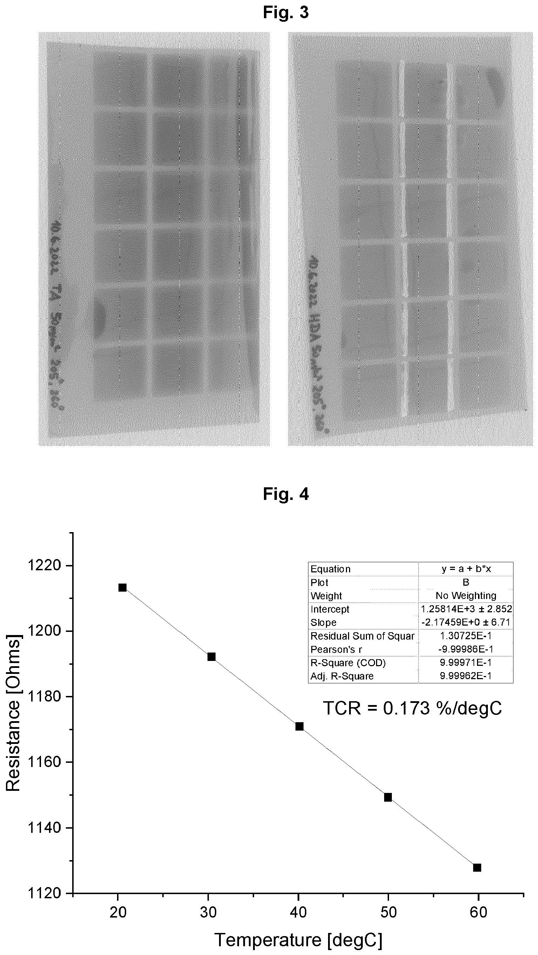

The distance between two adjacent parallel electrodes and their length copies the size of the sensor as seen in Fig. 2 and 3, typically between 10 - 100 mm. The thickness of the electrode depends on deposition method, typically in the range 5 - 100 $\mu$m.

It should be noted that spray-deposited layer of functionalized reduced graphene oxide is an essential part of sensor, working as the sensing layer.

(7) A passivation of sensing layer either using an adhesive polyimide foil or by deposition of varnish/polymer layer using casting, screen printing or spraying method, followed by an appropriate curing process. The passivation layer has the thickness typically in the range of tens of $\mu$m, preferably more than 25 $\mu$m. The typical electrical sheet resistance of the sensing layer is 100 - 5 000 $\Omega$/sq (Ohms per square). The typical temperature sensitivity (TCR) of the sensing layer is 0.1 - 0.3 %/°C. The typical accuracy and stability of the sensing layer is 0.5 °C or better in working range of -10°C to 100°C.

Temperature sensor comprising a functionalized reduced graphene oxide layer directly obtained using a method is characterized in that the change in the resistance value with respect to the temperature change has a linear relationship, with the linearity parameter (R-squared) R2 better than 0.99995.

**Examples**

Hereinafter, the present invention is described in more detail and specifically with reference to the Examples, which however are not intended to limit the present invention.

Example 1:

The temperature sensor based on reduced graphene oxide functionalized with dodecylamine ($C_{12}H_{27}N$)

The temperature sensor, the structure of which is shown in Fig. 1, was prepared as follow:

*(1) A preparation of colloidal dispersion of graphene oxide flakes in the water.*
Graphite powder (1 g) of 200 mesh is added to 250ml baker and sodium nitrate (1g) and sulfuric acid (46ml) are added subsequently under stirring in ice bath. Then potassium permanganate (6g) is added slowly to the system and the temperature is maintained below 10 °C. Colloidal dispersion is subsequently stirred for at least 50 and no more than 70 minutes while the temperature is still maintained below 10 °C. Next 92 ml of water is added drop wise and stirred for 15 minutes. Then 80 ml of cold water (temperature below 10 °C) and 3% aqueous solution $H_2O_2$ are added to reduce the residual $KMnO_4$ until the bubbling is disappeared. Suspension is filtered off through nylon filter, washed with plenty of water until pH of filtrate is about 7, and dried at 75 °C. The dried graphene oxide is finally redispersed in water resulting in concentration about 1 g/l.

*(2) A functionalization of graphene oxide flakes in dimethylsulfoxide (DMSO) solvent using dodecylamine ($C_{12}H_{27}N$) amine agent.*
2 ml of graphene oxide water dispersion (2 mg of GO) prepared in step 1 is added to 18 ml of dimethylsulfoxide (DMSO) organic solvent and properly mixed in and sonicated in ultrasonic bath for 5 min. The concentration of GO dispersion is 0.1 mg/ml. Then 2 g of dodecylamine ($C_{12}H_{27}N$) is added and again mixed in and sonicated in ultrasonic bath for 5 min. The prepared 20 ml of dispersion is placed in an oven at 95 °C for 6 hours.

*(3) A chemical reduction of colloidal dispersion prepared in step 2 using hydrazine monohydrate ($N_2H_4.H_2O$) as reducing agent.*
40 $\mu$l of 65% hydrazine monohydrate ($N_2H_4.H_2O$) is added and stirred in 20 ml dispersion of functionalized graphene oxide prepared in step (2). Then this solution is placed in an oven at 95°C for 24 hours.

*(4) A spray-deposition of colloidal dispersion prepared in step 3 on polyimide substrate.*
The polyimide foil (Kapton) of thickness of 25 $\mu$m and dimension of about 80 x 100 mm is properly cleaned using acetone and water and then dried. An airbrush gun of 0.1 mm nozzle is fastened on XY-movement automatic mechanism at the height of 13 cm above a heating plate, where the polyimide foil is fixed and kept at 190 °C. Prior to deposition, the colloidal dispersion of functionalized reduced graphene oxide is redispersed in ultrasonication bath for 5 min. Using 20 ml of as-prepared dispersion the homogenous and compact layer is continuously sprayed on polyimide foil over an area of 90 x 70 mm at pressure of 3 bars and flow of 10 $\mu$l/min. The deposited layer has a mass thickness of about 30 $\mu$g/cm$^2$.

*(5) A thermal reduction and annealing of spray-deposited layer from step 4.*
The polyimide foil prepared in step 4 is placed in the oven and heated in an air atmosphere under the following temperature programme, i.e. ramp to 250 °C at temperature rate of 0.15 °C/min (duration about 24 hours) and temperature dwell at 250 °C for another 24 hours.

*(6) A preparation of parallel electrode system using a silver paste.*
The temperature sensor of 20 x 20 mm dimension is cut out from thermally reduced and annealed sensing layer prepared on the polyimide foil in previous step. Then using a syringe disperser and commercial silver paste, two parallel electrodes of the length of 18 mm are deposited near the opposite edges of the square sensor, having distance between about 18 mm. The sensor is again placed in the oven at 90 °C for 2 hours (curing conditions depend on used silver paste).

*(7) A passivation of the sensing layer by deposition of tropical varnish layer.*
Two small areas are masked on parallel electrodes using adhesive polyimide foil. Then the compact and homogenous layer of tropical varnish is sprayed over whole sensor and the masks are removed. The passivation layer has the thickness more than 25 $\mu$m. The sensor is cured in the oven at 90 °C for 2 hours (curing conditions depend on used varnish).

*(8) Electrical performance of the prepared temperature sensor.*
The sensor is contacted for a four-probe measurement of the electrical resistance via two pairs of thin copper wires using conductive silver and placed into temperature-controlled test chamber for the electrical measurement. The measurement system consists of thermostat, benchtop multimeter and PC-controller.

The sensitivity and linearity of the temperature sensor are evaluated from the measurement of resistance change with temperature in the temperature range of 20 to 60 °C, as shown in Fig. 4. It can be seen that resistance of the sensor decreases as the temperature increases, showing the NTC effect. The sensitivity of the sensor is calculated according to relation (1) as *TCR* (temperature coefficient of resistance) = - 0.173 %/°C. The linearity of the resistance change was estimated using linear regression method and its linearity parameter (R-squared) $R^2$ was calculated as high as 0.99997, showing excellent performance. The electrical sheet resistance of the sensor is 1 213 $\Omega$/sq (Ohms per square) at 20 °C.

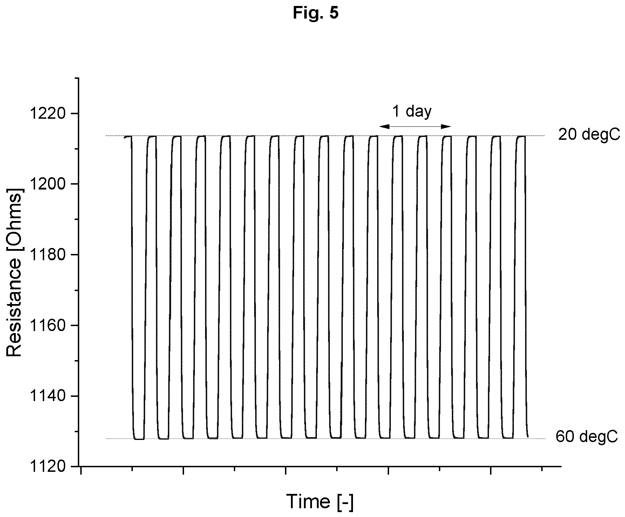

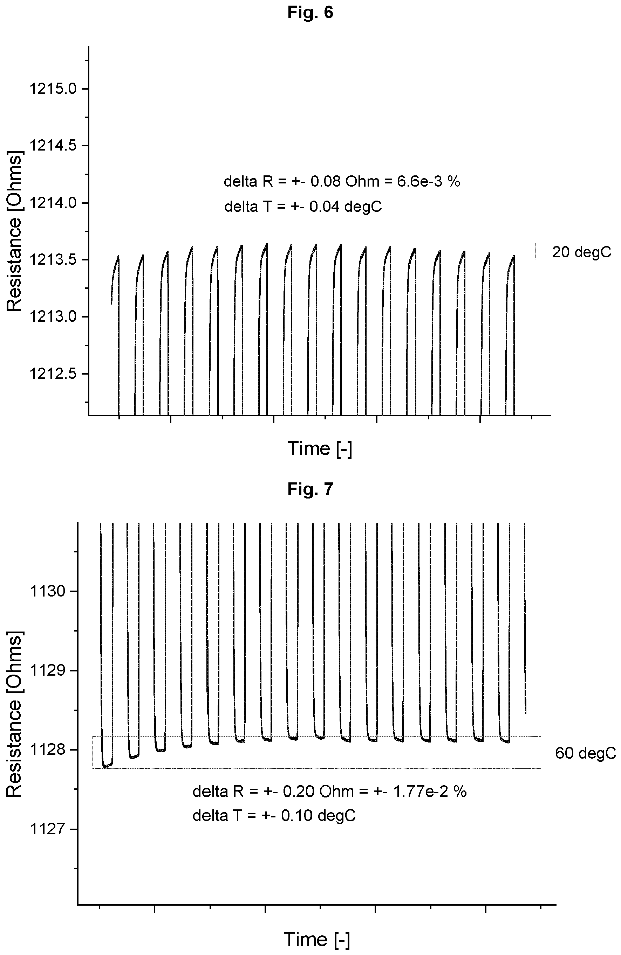

Referring to Fig. 5, the stability and accuracy of the temperature sensor was further tested by thermal cycling in the temperature range of 20 to 60 °C over 5 days. Duration of each cycle was 8 hours, 4 hours of stabilization per each temperature, counting together 16 cycles. The details of the change of resistance at the temperature of 20 °C and 60 °C during the thermal cycling are shown in Fig. 6 and Fig 7., respectively. As a result, the temperature sensor exhibits extreme stability during whole cycling with the accuracy estimated as low as +/- 0.1 °C in given temperature range. It should be noted that the measurement was performed in stabilized conditions within test chamber.

Example 2:

The effect of used dipolar aprotic organic solvent on the sensitivity of the temperature sensor based on reduced graphene oxide functionalized with dodecylamine ($C_{12}H_{27}N$).

In order to inspect the influence of organic solvents on the temperature sensor performance, there were prepared another 3 temperature sensors to the sensor prepared in Example 1. The preparation process was the same as in Example 1, except the organic solvent used in step 2. As a result, the set of 4 temperature sensor was fabricated, each sensor prepared with the use of different organic solvent, i.e. dimethylsulfoxide (DMSO), dimethylformamide (DMF), dimethylacetamide (DMA) and n-methylpyrrolidone (NMP).

The sensitivities of the temperature sensors were evaluated in the temperature range of 20 to 60 °C. The sheet resistances were estimated at 20 °C. The results are shown in Table 1. It can be seen that both parameters, sensitivity as well as sheet resistance, have similar values for all organic solvents except n-methylpyrrolidone (NMP). The increased sheet resistance and sensitivity is very likely caused by a contamination of sensing layer with the product of partial decomposition of the NMP during spraying and annealing process.

Table 1

| Organic solvent | Sheet resistance [$\Omega$/sq] | Sensitivity *TCR* [%/°C] |
|---|---|---|
| dimethylacetamide (DMA) | 1 164 | - 0.171 |
| dimethylformamide (DMF) | 1 310 | - 0.179 |
| n-methylpyrrolidone (NMP) | 1 730 | - 0.226 |
| dimethylsulfoxide (DMSO) | 1 255 | -0.180 |

Example 3:

The effect of used amine agent on the sensitivity of the temperature sensor prepared in dimethylacetamide (DMA) organic solvent.

In order to investigate the influence of different amine agents on the temperature sensor performance, a set of temperature sensors were prepared according to Example 1, where different amine agent was used for each sensor,

i.e. dodecylamine ($C_{12}H_{27}N$), ethylamine ($C_2H_5NH_2$), hexylamine ($C_6H_{15}N$), benzylamine ($C_7H_9N$), tyramine ($C_8H_{11}NO$), hexadecylamine ($C_{16}H_{35}N$) or octadecylamine ($C_{18}H_{39}N$).

The sensitivities of the temperature sensors were evaluated in the temperature range of 20 to 60 °C. The sheet resistances were estimated at 20 °C. The results, shown in Table 2, revealed a clear dependence of both, sensitivity and sheet resistance, on the size of amine agent. In brief, the bigger amine molecule is the higher potential barrier must be overcome by charge carriers between frGO flakes, which results in increased resistance. In addition, the higher barrier proportionally affects the activation energy in hoping mechanism, as so the sensitivity of the sensor is increased as well.

Table 2

| Amine agent | Length $x$ of CxHy chain | Sheet resistance [$\Omega$/sq] | Sensitivity TCR [%/°C] |
|---|---|---|---|
| ethylamine ($C_2H_5NH_2$) | 2 | 834 | - 0.138 |
| hexylamine ($C_6H_{15}N$) | 6 | 861 | - 0.149 |
| benzylamine ($C_7H_9N$) | 7 (aromatic ring) | 803 | - 0.133 |
| tyramine ($C_8H_{11}NO$) | 8 (aromatic ring) | 1 160 | - 0.162 |
| dodecylamine ($C_{12}H_{27}N$) | 12 | 1 043 | - 0.165 |
| hexadecylamine ($C_{16}H_{35}N$) | 16 | 1 569 | - 0.182 |
| octadecylamine ($C_{18}H_{39}N$) | 18 | 1 445 | - 0.203 |

Example 4:

The influence of efficiency of the thermal reduction on sensitivity of the temperature sensor based on reduced graphene oxide functionalized with dodecylamine ($C_{12}H_{27}N$).

The sufficient level of the thermal reduction and annealing of the prepared sensing layers is a key factor in removal of contaminants, oxygen-containing groups and captured traces of organic solvent. A set of temperature sensors were prepared according to Example 1, where dimethylacetamide (DMA) organic solvent was used instead of dimethylsulfoxide (DMSO) for all sensors. In order to scrutinize the effect of the temperature of the thermal reduction, the different temperature was applied during the thermal reduction process for each sensor.

According to results shown in Table 3 there is clear increase of the sensitivity as well as sheet resistance with decrease of reduction temperature. Although enhanced sensitivity is always appreciated, the increase of the sheet resistance may indicate the problem with the sensing layer. For this purpose, some of the samples underwent the thermal cycling and their stabilities are compared in Table 4. Unfortunately, in this case it was confirmed that apparent enhancement of sensors performance is at the cost of accuracy and stability.

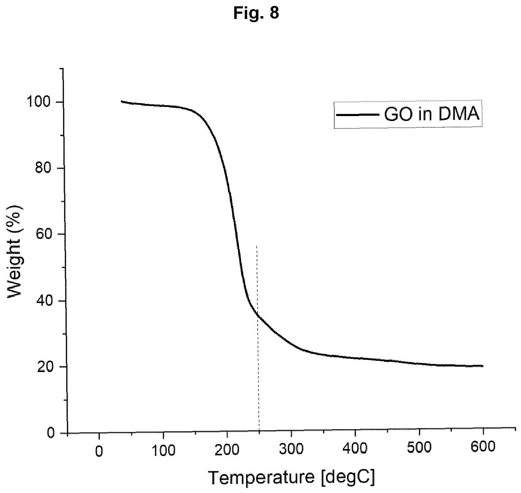

As mentioned earlier, the temperature of thermal reduction has a major impact on successful removal of the oxygen-based groups, which remained after chemical reduction. In Fig. 8 the curve of thermo-gravimetric analysis (TGA) shows the weight loss of graphene oxide flakes at different temperatures during the reduction process in air atmosphere. The analysed sample was taken in step 2 just before the amination as the colloidal dispersion of GO flakes in dimethylacetamide (DMA) organic solvent. Prior TGA analysis, the sample was properly dried in an oven at 90 °C for 2 days. As it can be seen in Fig. 8, the most oxygen-based groups are removed before reaching the temperature of 250 °C, which is consistent with scientific literature. The further weight-loss is then accompanied with the decomposition of traces of dimethylacetamide (DMA) organic solvent.

Table 3

| Temperature of thermal reduction [°C] | Sheet resistance [$\Omega$/sq] | Sensitivity TCR [%/°C] |
|---|---|---|
| 190 | 1 626 | -0.210 |
| 210 | 1 235 | - 0.182 |
| 230 | 1 385 | - 0.186 |
| 250 | 1 165 | -0.159 |

Table 4

| Temperature of thermal reduction [°C] | Relative change of resistance between two cycles [%] |
|---|---|
| 220 | +- 0.011 |
| 230 | +- 0.004 |
| 240 | +- 0.002 |
| 250 | < +- 0.001 |

References

1) CN110823396A

2) KR1575012B1

3) CN114235212A

4) CN113280938A

5) US11325151B2

6) N114349782A

7) US10766774B2

8) WO2019211813A1

9) CN108793148B

10) N107192739A

11) CN110903505A

12) CN110823396A

13) Qingxia Liu at al., 2019 January 15, Advanced Materials Technologies, Vol 4, Iss 3

14) Nagarjuna Neella et al.,2017 december 1, Sensors and Actuators A: Physical, Vol.268, pages 173-182

15) Guanyu Liu et. al., 2018 May 2, Sensors 18, 1400

16) Peng-Gang Ren et al., 2011 Nanotechnology 22 055705

17) Satyaprakash Sahoo et al., 2012, https://www.researchgate.net/publication/222942785

18) De Kong et al., 2012 Langmuir, 28, 13467-13472

19) Sohail F. Shaikh and Muhammad M. Hussain, 2020 August 17, Appl.Phys.Lett. 117, doi: 10.1063/5.0017769

20) Peng-Gang Ren et al., 2014, Journal of Applied Polymer Science, DOI: 10.1002/APP.39803

21) Website: https://pubs.rsc.org/en/content/articlelanding/2016/ra/c5ra19954a#!divAbstract

22) Thanh Tuan Hguyen et al., Journal of Membrane Science 540 (2017) 108-119

23) Chunyan Wang et al., 2015, Applied Surface Science 362

24) Wufeng Chen et al., 2010, Carbon 48, 1146-1152

**Claims**

1. A method of preparing functionalized reduced graphene oxide layer comprising the following steps:

   a) preparation of colloidal dispersion of graphene oxide flakes in the water with concentration 0,5 g/l or less using modified Hummer's method wherein:

   - the temperature of the colloidal dispersion is maintained below 10°C during adding of oxidation agents, preferably KMnO4,
   - colloidal dispersion is subsequently stirred for at least 50 and no more than 70 minutes while the temperature of the colloidal dispersion is maintained below 10 °C,
   - temperature of the water added to the dispersion after stirring is no more than 10°C;

   b) functionalization of graphene oxide flakes in dipolar aprotic organic solvent using amine agent;
   c) reduction of functionalized graphene oxide flakes using reducing agent,
   d) functionalization and reduction according to step b) and step c) is carried out at elevated temperature of at least 90°C but no more than 105 °C;
   e) deposition colloidal dispersion of reduced functionalized graphene oxide flakes on non-conductive or electrically passivated substrate using spraying deposition to form sprayed layer under following conditions:

   - liquid droplets with size of no more than 5 $\mu$m
   - substrate temperature during deposition is at least 150 °C,
   - sprayed colloid has a concentration of no more than 0.2 g/l;

   f) thermal reduction and annealing of sprayed layer from step e) under the following conditions:

   - small temperature ramp up to 0.2 °C/min
   - stabilization at a temperature of at least 230 °C
   - dwelling time of at least 10 hours;

   g) passivation of prepared active layer using graphene oxide sprayed layer or adhesive polyimide foil or tropical (non-aromatic) varnish for mechanical and electro-chemical protection.

2. The method according to claim 1, wherein the amine agent in step b) is selected from the group consisting of dodecylamine ($C_{12}H_{27}N$), ethylamine ($C_2H_5NH_2$), hexylamine ($C_6H_{15}N$), benzylamine ($C_7H_9N$), tyramine ($C_8H_{11}NO$), hexadecylamine ($C_{16}H_{35}N$) or octadecylamine ($C_{18}H_{39}N$).

3. The method according to any of the previous claims, wherein the reducing agent in step c) is selected from the group consisting of hydrazine ($N_2H_4$), sodium borohydride ($NaBH_4$) or their combination.

4. The method according any of the previous claims, wherein the dipolar aprotic organic solvent in step b) is selected from (dimethylsulfoxide (DMSO), dimethylformamide (DMF), dimethylacetamide (DMA), n-methylpyrrolidone (NMP).

5. The method according any of the previous claims, wherein thermal reduction and annealing of sprayed layer from step e) of the claim 1 is under stabilization at a temperature at least 250°C.

6. The method according to any of the previous claims, wherein the non-conductive or electrically passivated substrate is polyimide substrate, preferably Kapton.

7. The method according to any of the previous claims, wherein thermal reduction and annealing of sprayed layer takes place in an air atmosphere.

8. A functionalized reduced graphene oxide layer directly obtained using a method according to any of the previous claims.

**9.** A temperature sensor comprising a functionalized reduced graphene oxide layer according to claim 8.

## Fig. 1

5

3

4

2

1

1. Flexible substrate     2. Sensing layer     3. Ag electrodes

4. Insulation layer     5. Copper leads/cabling

## Fig. 2

## Fig. 3

## Fig. 4

| Equation | y = a + b*x |
|---|---|
| Plot | B |
| Weight | No Weighting |
| Intercept | 1.25814E+3 ± 2.852 |
| Slope | -2.17459E+0 ± 6.71 |
| Residual Sum of Squar | 1.30725E-1 |
| Pearson's r | -9.99986E-1 |
| R-Square (COD) | 9.99971E-1 |
| Adj. R-Square | 9.99962E-1 |

TCR = 0.173 %/degC

**Fig. 5**

**Fig. 6**

delta R = +- 0.08 Ohm = 6.6e-3 %

delta T = +- 0.04 degC

20 degC

Time [-]

**Fig. 7**

60 degC

delta R = +- 0.20 Ohm = +- 1.77e-2 %

delta T = +- 0.10 degC

Time [-]

**Fig. 8**

Europäisches Patentamt
European Patent Office
Office européen des brevets

# EUROPEAN SEARCH REPORT

Application Number

EP 22 18 1056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNG HANYUNG: "Stability-improved reduced graphene oxide sensors via resistance initialization of laser irradiation for temperature and gas sensing", JOURNAL OF THE KOREAN PHYSICAL SOCIETY, THE KOREAN PHYSICAL SOCIETY, SEOUL, vol. 80, no. 9, 10 January 2022 (2022-01-10), pages 914-919, XP037819083, ISSN: 0374-4884, DOI: 10.1007/S40042-021-00394-7 [retrieved on 2022-01-10] * Abstract; Materials and Methods * ----- | 8,9 | INV. C01B32/192 C01B32/194 G01K7/18 |
| X | NGUYEN THANH TUAN ET AL: "Effects of grafting methods for functionalization of graphene oxide by dodecylamine on the physical properties of its polyurethane nanocomposites", JOURNAL OF MEMBRANE SCIENCE, ELSEVIER BV, NL, vol. 540, 17 June 2017 (2017-06-17), pages 108-119, XP085177605, ISSN: 0376-7388, DOI: 10.1016/J.MEMSCI.2017.06.040 * Experimental * ----- | 1-7 | TECHNICAL FIELDS SEARCHED (IPC) C01B G01K |

The present search report has been drawn up for all claims

| Place of search | Date of completion of the search | Examiner |
|---|---|---|
| The Hague | 22 December 2022 | Mattheis, Chris |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10766774 B2
- CN 110823396 A
- KR 1575012 B1
- CN 114235212 A
- CN 113280938 A
- US 2798878 A
- US 10046972 B2
- CN 108793148 B
- CN 110903505 A
- WO 2019211813 A1
- CN 114349782 A
- US 11325151 B2
- CN 107192739 A

**Non-patent literature cited in the description**

- **QINGXIA LIU.** *Advanced Materials Technologies,* 15 January 2019, vol. 4 (3
- **NAGARJUNA NEELLA et al.** *Sensors and Actuators A: Physical,* 01 December 2017, vol. 268, 173-182
- **GUANYU LIU.** *Sensors,* 02 May 2018, vol. 18, 1400
- **PENG-GANG REN et al.** *Nanotechnology,* 2011, vol. 22, 055705
- **DE KONG et al.** *Langmuir,* 2012, vol. 28, 13467-13472
- **SOHAIL F. SHAIKH ; MUHAMMAD M. HUSSAIN.** *Appl.Phys.Lett.,* 17 August 2020, 117
- **PENG-GANG REN et al.** *Journal of Applied Polymer Science,* 2014
- **THANH TUAN HGUYEN et al.** *Journal of Membrane Science,* 2017, vol. 540, 108-119
- **CHUNYAN WANG et al.** *Applied Surface Science,* 2015, 362
- **WUFENG CHEN et al.** *Carbon,* 2010, vol. 48, 1146-1152